(19) Europäisches Patentamt
European Patent Office
Office européen des brevets

(11) Veröffentlichungsnummer: **0 020 967**
**B1**

(12) # EUROPÄISCHE PATENTSCHRIFT

(45) Veröffentlichungstag der Patentschrift: **02.03.83**

(51) Int. Cl.³: **B 01 D 53/14,** B 01 J 19/04

(21) Anmeldenummer: **80102553.7**

(22) Anmeldetag: **09.05.80**

(54) **Verfahren zur gleichzeitigen Entfernung von Wasser und Schwefelwasserstoff aus Gasen.**

(30) Priorität: **07.06.79 DE 2923012**

(43) Veröffentlichungstag der Anmeldung:
**07.01.81 Patentblatt 81/1**

(45) Bekanntmachung des Hinweises auf die Patenterteilung:
**02.03.83 Patentblatt 83/9**

(84) Benannte Vertragsstaaten:
**AT BE CH DE FR GB IT LI NL SE**

(56) Entgegenhaltungen:
**DE-A-1 942 518**
**DE-A-2 227 071**
**DE-A-2 437 576**
**DE-A-2 544 569**
**DE-A-2 551 717**
**DE-A-2 611 613**
**US-A-2 600 328**
**US-A-3 362 133**
**US-A-4 137 294**

(73) Patentinhaber: **BASF Aktiengesellschaft,**
**Carl-Bosch-Strasse 38, D-6700 Ludwigshafen (DE)**

(72) Erfinder: **Volkamer, Klaus, Dr., Heidelberger Ring 21,**
**D-6710 Frankenthal (DE)**
Erfinder: **Wagner, Ulrich, Dr., Knospstrasse 7,**
**D-6703 Limburgerhof (DE)**
Erfinder: **Wagner, Eckhart, Dr., Jakobsgarten,**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen)

EP 0 020 967 B1

# Verfahren zur gleichzeitigen Entfernung von Wasser und Schwefelwasserstoff aus Gasen

Die vorliegende Erfindung betrifft ein Verfahren zur gleichzeitigen Entfernung von Wasser und Schwefelwasserstoff aus Gasen durch Behandlung der Gase mit Dialkyläthern von Polyäthylenglykolen.

Es ist bekannt, beispielsweise aus der DE-OS 2 437 576, Erdgas gleichzeitig zu trocknen und zu süßen, indem das Schwefelwasserstoff und Wasser enthaltende Erdgas unter Druck mit einem Dialkyläther eines Polyäthylenglykols mit einem Gehalt von 2 bis 15 Gew.-% Wasser behandelt wird, wobei nach der Behandlung ein Erdgas mit einem Taupunkt unter dem angewandten Druck von etwa −5°C erhalten wird. Die nach diesem Verfahren erhaltenen Gase weisen jedoch für viele Anwendungszwecke nicht genügend tiefe Taupunkte auf und es bestand daher Bedarf nach einem Verfahren, mit dem Gase, besonders Erdgase, mit einem niedrigeren Taupunkt als nach den bekannten Verfahren erhalten werden können.

Die vorliegende Erfindung soll nun eine Verbesserung der Arbeitsweise und Wirtschaftlichkeit der bekannten Verfahren bewirken.

Es wurde nun ein vorteilhaftes Verfahren gefunden zur gleichzeitigen Entfernung von Wasser und Schwefelwasserstoff aus Wasser und Schwefelwasserstoff enthaltenden Gasen durch Behandlung der Gase in einer Absorptionszone unter erhöhtem Druck mit Dialkyläthern von Polyäthylenglykolen als Lösungsmittel, Ausstreifen des Schwefelwasserstoffs aus dem aus der Absorptionszone erhaltenen beladenen Lösungsmittel in einer Desorptionszone sowie Abtrennen des in der Absorptionszone aufgenommenen Wassers aus dem Lösungsmittel und Rückführung des regenerierten Lösungsmittels in die Absorptionszone, welches dadurch gekennzeichnet ist, daß das Lösungsmittel zusätzlich 0,01 bis 20 Gew.-% eines Alkohols oder Äthers mit einem Siedepunkt im Siedebereich von 50 bis 140°C, bezogen auf die Lösungsmittelmischung, enthält.

Nach dem neuen Verfahren können in einfacher Weise Gase mit sehr niedrigen Taupunkten, z. B. mit Taupunkten bis zu −50°C, erhalten werden.

Die erfindungsgemäß einzusetzenden Wasser und Schwefelwasserstoff enthaltenden Gase enthalten das Wasser in der Regel als Wasserdampf, und zwar im allgemeinen in einer Menge, die innerhalb des Mengenbereichs liegt, dessen obere Grenze der Wasserdampfsättigung des in die Absorptionszone einzusetzenden Gases unter dem gegebenen Druck und der gegebenen Temperatur entspricht und dessen untere Grenze dem Wasserdampftaupunkt des einzusetzenden Gases unter dem gegebenen Druck von −30°C, vorzugsweise −5°C, insbesondere +10°C, entspricht.

Die Menge des aus dem Gas zu entfernenden Schwefelwasserstoffs kann ebenfalls innerhalb weiter Grenzen variieren. Im allgemeinen weisen die einzusetzenden Gase einen Schwefelwasserstoffgehalt von mindestens 5 Vol.-ppm, vorzugsweise mindestens 10 Vol.-ppm, insbesondere mindestens 100 Vol.-ppm und in der Regel bis zu 50 Vol.-%, vorzugsweise bis zu 40 Vol.-%, insbesondere bis zu 30 Vol.-%, auf.

Neben dem Schwefelwasserstoff enthalten die einzusetzenden Gase häufig als weiteres Sauergas Kohlendioxid, z. B. in Mengen von 0,01 bis 60 Vol.-%, vorzugsweise 0,1 bis 45 Vol.-%, insbesondere 0,1 bis 30 Vol.-%. Falls das Gas Kohlendioxid enthält, können Schwefelwasserstoff und Kohlendioxid gemeinsam in der Absorptionszone entfernt werden. Eine vorteilhafte Ausführungsform des Verfahrens besteht jedoch darin, daß Schwefelwasserstoff, falls das Gas Kohlendioxid enthält, selektiv in der Absorptionszone aus dem Gas entfernt wird.

Das Verfahren nach der Erfindung wird mit besonderem Vorteil zur Entfernung von Wasser und Schwefelwasserstoff aus Erdgasen verwendet.

Als Dialkyläther von Polyäthylenglykolen kommen im allgemeinen solche der allgemeinen Formel

$$R^1-O[-CH_2-CH_2-O]_n-R^2$$

in Betracht, in der $R^1$ und $R^2$ jeweils einen verzweigten oder geradkettigen $C_1$- bis $C_5$-Alkylrest, vorzugsweise $C_1$- bis $C_4$-Alkylrest, und n zur Kennzeichnung der Anzahl der Äthylenglykolgruppen eine ganze Zahl von 2 bis 9, vorzugsweise 3 bis 8 bedeuten, wobei $R^1$ und $R^2$ gleich oder verschieden sein können. Zweckmäßig werden Dialkyläther verwendet, in denen $R^1$ und $R^2$ Kohlenwasserstoffreste bedeuten. Geeignete Reste $R^1$ und $R^2$ sind z. B. der Methyl-, Äthyl-, n-Propyl-, Isopropyl-, n-Butyl-, Isobutyl-, tert.-Butyl-Rest, die Amyl-Reste wie tert.-Amyl-Rest. Geeignete Dialkyläther von Polyäthylenglykolen sind z. B. der Dimethyl-, Methyl-äthyl-, Methyl-n-propyl-, Methyl-isopropyl-, Methyl-n-butyl-, Methyl-isobutyl-, Methyl-tert.-butyl-, Methyl-tert.-amyl-, Diäthyl-, Äthyl-n-propyl-, Äthyl-isopropyl-, Äthyl-n-butyl-, Äthyl-isobutyl-, Äthyl-tert.-butyl-, Äthyl-tert.-amyl-, Di-n-propyl-, Diisopropyl-, n-Propyl-isopropyl-, n-Propyl-n-butyl-, n-Propyl-isobutyl-, n-Propyl-tert.-butyl-, n-Propyl-tert.-amyl-, Isopropyl-n-butyl-, Isopropyl-isobutyl-, Isopropyl-tert.-butyl-, Isopropyl-tert.-amyl-äther. Vorzugsweise werden die Dimethyl- und Methylisopropyläther verwendet. Man kann Dialkyläther von Polyäthylenglykolen mit der gleichen Anzahl n der Äthylenglykolgruppen verwenden. In der Praxis werden jedoch in der Regel Mischungen von Dialkyläthern von Polyäthylenglykolen mit im allgemeinen 2 bis 8 Äthylenglykolgruppen verwendet.

Es ist ein wesentliches Merkmal des Verfahrens nach der Erfindung, daß für die Behandlung der Wasser und Schwefelwasserstoff enthaltenden Gase in der Absorptionszone als Lösungsmittel Dialkyläther von Polyäthylenglykolen mit einem Gehalt von 0,01 bis 20 Gew.-%, vorzugsweise 0,1 bis 10 Gew.-%, insbesondere 0,2 bis 6 Gew.-% eines Alkohols oder Äthers mit einem Siedepunkt im Siedebereich von 50 bis 140° C, vorzugsweise 50 bis 125° C, insbesondere 55 bis 120° C, bezogen auf die Lösungsmittelmischung, verwendet werden. Es kann in manchen Fällen vorteilhaft sein, Gehalte an Alkohol oder Äther von mindestens 0,5 Gew.-% anzuwenden.

Als Alkohole werden vorzugsweise aliphatische Alkohole mit einem Siedepunkt im Siedebereich von 50 bis 140° C mit im allgemeinen 1 bis 5, vorzugsweise 1 bis 4 Kohlenstoffatomen, verwendet, die noch eine Methoxy- oder Äthoxy-Gruppe enthalten können. Geeignete Alkohole sind z. B. Äthanol, n-Propanol, Isopropanol, n-Butanol, Isobutanol, tert.-Butanol, sec.-Butanol, n-Amylalkohol, Isoamylalkohol, tert.-Amylalkohol, 2-Pentanol, Äthylenglykolmonomethyläther, Äthylenglykolmonoäthyläther und vorzugsweise Methanol.

Als Äther werden vorzugsweise aliphatische oder alicyclische Äther verwendet. Als aliphatische Äther kommen beispielsweise symmetrische oder unsymmetrische Äther der allgemeinen Formel R—O—R′ mit einem Siedepunkt im Siedebereich von 50 bis 140°C in Betracht, in denen im allgemeinen der aliphatische Rest R ein Kohlenwasserstoffrest mit 1 bis 5, vorzugsweise 1 bis 4 Kohlenstoffatomen und der aliphatische Rest R′ ein Kohlenstoffrest mit 2 bis 5, vorzugsweise 2 bis 4 Kohlenstoffatomen ist. Die Gesamtzahl der Kohlenstoffatome beider Kohlenwasserstoffreste beträgt zweckmäßig 5 bis 10, vorzugsweise 5 bis 9. Geeignete Reste R und R′ sind z. B. der Äthyl-, n-Propyl-, Isopropyl-, n-Butyl-, Isobutyl-, tert.-Butyl-Rest, die Amyl-Reste wie tert.-Amyl-Rest, wobei R zusätzlich einen Methyl-Rest bedeuten kann. Geeignete Äther sind beispielsweise symmetrische Äther wie Di-n-propyläther, Diisopropyläther, Diisobutyläther sowie vorzugsweise unsymmetrische Äther wie Methyl-n-butyläther, Methyl-tert.-butyläther, Äthyl-tert.-butyläther, n-Propyl-tert.-butyläther, Isopropyl-tert.-butyläther, Isobutyl-tert.-butyläther, n-Butyl-tert.-butyläther, Methyl-tert.-amyläther, Äthyl-tert.-amyläther, n-Propyl-tert.-amyläther, Äthyl-isopropyläther, n-Propyl-isopropyläther, N-Butyl-isopropyläther, Isobutyl-isopropyläther, Äthyl-n-butyläther. Besonders vorteilhaft werden von den unsymmetrischen Äthern solche verwendet, in denen ein Rest eine tert.-Amyl- oder insbesondere einer tert.-Butyl-Gruppe wie Methyl-tert.-butyläther, Methyl-tert.-amyläther. Weitere geeignete aliphatische Äther sind z. B. die Dialkyläther von Äthylenglykol oder 1,2-Propylenglykol mit vorzugsweise $C_1$- bis $C_4$-Alkylresten wie Äthylenglykol-dimethyläther, -diäthyläther, -diisopropyläther, -di-n-propyläther, -methyläthyläther, -methylisopropyläther, -methyl-n-propyläther, -methyl-tert.-butyläther, 1,2-Propylenglykol-dimethyläther. Als alicyclische Äther kommen beispielsweise 2-Methyltetrahydrofuran, 3-Methyltetrahydrofuran, 1,4-Dioxan, Tetrahydropyran und vorzugsweise Tetrahydrofuran in Betracht.

Die Absorptionszone wird unter erhöhtem Druck betrieben. Im allgemeinen wird in der Absorptionszone ein Druck zwischen 5 und 150 bar, vorzugsweise zwischen 10 und 130 bar, insbesondere zwischen 20 und 120 bar, aufrechterhalten. In der Regel betragen die Temperaturen in der Absorptionszone −20 bis +60°C, vorzugsweise −20 bis +40°C. Das Lösungsmittel wird der Absorptionszone zweckmäßig in der oberen Hälfte, vorzugsweise im oberen Drittel, zugeführt und im allgemeinen im Gegenstrom zu den zu behandelnden Gasen geführt. Vorzugsweise weist das der Absorptionszone zugeführte Lösungsmittel einen Wassergehalt von höchstens 1,8 Gew.-%, vorzugsweise höchstens 1 Gew.-%, insbesondere höchstens 0,5 Gew.-% Wasser, auf.

Das Lösungsmittel kann der Absorptionszone als ein Strom zugeführt werden. In einer vorteilhaften Ausführungsform des Verfahrens werden der Absorptionszone ein Lösungsmittelhauptstrom und oberhalb der Zuführung des Lösungsmittelhauptstroms als Lösungsmittelnebenstrom ein zweiter Lösungsmittelstrom zugeführt, der einen geringeren Gehalt an dem Alkohol oder Äther mit einem Siedepunkt im Siedebereich von 50 bis 140°C und ggf. an Wasser aufweist, als der Lösungsmittelhauptstrom. Das Volumenverhältnis der Lösungsmittelmenge des Lösungsmittelhauptstromes zu der des Lösungsmittelnebenstromes beträgt im allgemeinen 100 : 1 bis 1 : 2, vorzugsweise 50 : 1 bis 1 : 2, insbesondere 20 : 1 bis 1 : 1. Zweckmäßig weist der Lösungsmittelnebenstrom einen Gehalt an dem erfindungsgemäß zuzusetzenden Alkohol oder Äther auf, der 98 bis 1%, vorzugsweise 95 bis 2%, insbesondere 90 bis 5% des Gehaltes an dem Alkohol oder Äther im Lösungsmittelhauptstrom beträgt. Der der Absorptionszone zugeführte Lösungsmittelnebenstrom kann den gleichen Wassergehalt aufweisen, wie der Lösungsmittelhauptstrom. Vorzugsweise wird jedoch ein Lösungsmittelnebenstrom mit einem niedrigeren Wassergehalt als der des Lösungsmittelhauptstroms verwendet, z. B. ein Lösungsmittelnebenstrom mit einem Wassergehalt, der 98 bis 1%, vorzugsweise 95 bis 2%, insbesondere 90 bis 5% des Wassergehaltes im Lösungsmittelhauptstrom beträgt.

Das aus der Absorptionszone erhaltene, mit dem ausgewaschenen Schwefelwasserstoff und Wasser und ggf. Kohlendioxid beladene Lösungsmittel wird anschließend in die Desorptionszone übergeführt, in der der Schwefelwasserstoff und ggf. Kohlendioxid ausgestreift werden. Im allgemeinen werden in der Desorptionszone Temperaturen von 100 bis 200° C, vorzugsweise 120 bis 180° C, insbesondere 130 bis 160° C, sowie Drucke von 1,01 bis 5, vorzugsweise 1,1 bis 2, insbesondere 1,2 bis 1,8 bar, aufrechterhalten. Das beladene Lösungsmittel wird der Desorptionszone zweckmäßig

in der oberen Hälfte, vorzugsweise im oberen Drittel, zugeführt. In einer bevorzugten Ausführungsform des Verfahrens nach der Erfindung wird als Ausstreifmittel in der Desorptionszone gebildeter Dampf des im Lösungsmittel enthaltenen Alkohols oder Äthers mit einem Siedepunkt im Siedebereich von 50 bis 140°C verwendet, der in der Desorptionszone im Gegenstrom zum beladenen Lösungsmittel geführt wird. Der Alkohol- oder Ätherdampf wird zweckmäßig durch indirekten Wärmeaustausch mit einem Heizmedium vorzugsweise im unteren Drittel der Desorptionszone erzeugt. Der indirekte Wärmeaustausch kann z. B. mit Hilfe eines Aufkochers erfolgen, durch den ein Heizmedium, beispielsweise Wasserdampf oder heißes Öl geleitet wird. Das regenerierte Lösungsmittel wird im unteren Drittel, im allgemeinen am Boden, der Desorptionskolonne abgezogen und zweckmäßig in die Absorptionszone zurückgeführt. Am Kopf der Desorptionszone wird das ausgetriebene Schwefelwasserstoffgas, welches ebenfalls ausgetriebenes Kohlendioxid enthalten kann, abgezogen. Das abgezogene Schwefelwasserstoffgas kann einer Claus-Anlage zugeführt werden.

Die als Ausstreifmittel verwendeten Alkohol- oder Ätherdämpfe werden zweckmäßig nach dem Austritt aus der Desorptionszone in einem Kondensor kondensiert und der Desorptionszone am Kopf wieder zugeführt.

Zur Entfernung des im aus der Absorptionszone erhaltenen beladenen Lösungsmittel enthaltenen Wassers wird zweckmäßig aus dem im Kreise geführten Lösungsmittelstrom, im allgemeinen aus der Desorptionszone oder vorzugsweise aus dem am Sumpf der Desorptionszone abgezogenen regenerierten Lösungsmittel, ein Lösungsmittelnebenstrom abgezogen, aus dem in einer Abtrennzone Wasser ganz oder teilweise abgetrennt wird. Zweckmäßig wird die Abtrennzone bei einem Druck betrieben, der mindestens 0,01 bar, vorzugsweise mindestens 0,1 bar, insbesondere bis 0,5 bar niedriger liegt als der Druck in der Desorptionszone. Der aus der Abtrennzone erhaltene Lösungsmittelnebenstrom wird zweckmäßig in den Lösungsmittelhauptstrom bzw. zur Absorptionszone zurückgeführt. In einer vorteilhaften Ausführungsform des Verfahrens wird aus dem Lösungsmittelnebenstrom in der Abtrennzone Wasser und der im Lösungsmittel enthaltene Alkohol oder Äther mit einem Siedepunkt im Siedebereich von 50 bis 140°C ganz oder teilweise abgetrennt und der erhaltene Lösungsmittelnebenstrom der Absorptionszone als zweiter Lösungsmittelstrom oberhalb der Zuführung des Lösungsmittelhauptstroms zugeführt. Zweckmäßig wird das Wasser sowie der Alkohol oder Äther in der Abtrennzone durch Destillation aus dem Lösungsmittelnebenstrom abgetrennt. Vorzugsweise wird bei der Destillation ein Druck aufrechterhalten, der niedriger als der Druck in der Desorptionszone liegt. Im allgemeinen beträgt der Druck in der Destillationszone 0,01 bis 1, vorzugsweise 0,025 bis 0,9, insbesondere 0,05 bis 0,5 bar. Das in der Abtrennzone abgetrennte Gemisch aus Wasser und dem Alkohol oder Äther wird zweckmäßig in einer weiteren Trennzone in Wasser und den Alkohol oder Äther aufgetrennt. Der erhaltene Alkohol oder Äther kann in den Lösungsmittelkreislauf zurückgeführt werden. Die weitere Trennzone kann z. B. als Destillation betrieben werden oder, vorzugsweise wenn das Wasser und der Alkohol oder Äther getrennte Phasen ausbilden, eine Phasentrennzone, z. B. ein Abscheidegefäß sein.

In einer speziellen Ausführungsform des Verfahrens wird zwischen der Absorptionszone und der Desorptionszone eine Entspannungsverdampfungszone (Flashverdampfungszone) zwischengeschaltet, in der das aus der Absorptionszone erhaltene beladene Lösungsmittel vor der Überführung in die Desorptionszone entspannt wird. Diese Ausführungsform wird vorzugsweise bei der Behandlung von Erdgasen angewendet. Der sich bei der Entspannungsverdampfung bildende gasförmige Anteil, der bei der Erdgaswäsche einen höheren Gehalt an Methan aufweist, wird zweckmäßig dem einzusetzenden Rohgasstrom zugeführt. Bei dieser Arbeitsweise wird bei der Erdgaswäsche aus der Desorptionszone ein Schwefelwasserstoffgas mit nur einem geringen Methangehalt erhalten, welches vorteilhaft in einer Clausanlage eingesetzt werden kann. In der Entspannungsverdampfungszone werden zweckmäßig Drucke von 5 bis 50, vorzugsweise 7 bis 35, insbesondere 10 bis 30 bar aufrechterhalten. Im allgemeinen liegt der Druck in der Entspannungsverdampfungszone 4 bis 45 bar, vorzugsweise 6 bis 33 bar, insbesondere 9 bis 28 bar über dem Druck in der Desorptionszone.

In der Figur wird ein schematisches Diagramm einer Ausführungsform des erfindungsgemäßen Verfahrens dargestellt. Ein Schwefelwasserstoff und Wasser, z. B. in Form von Wasserdampf, enthaltendes Gas, z. B. ein Erdgas, welches zusätzlich noch Kohlendioxid enthalten kann, wird durch Leitung 1 am Sumpf der Absorptionskolonne 2 eingeführt. Die Hauptmenge des Lösungsmittels, z. B. eine Methanol enthaltende Mischung von Methylisopropyläthern von Polyäthylenglykolen, wird durch Leitung 3 in der oberen Hälfte der Absorptionskolonne zugegeben und fließt im Gegenstrom zum auszuwaschenden Gas, welches mit Leitung 1 zugeführt wird. Gleichzeitig wird durch Leitung 4 ein Lösungsmittelnebenstrom zugeführt, der einen geringeren Methanol- und Wassergehalt als der durch Leitung 3 zugeführte Lösungsmittelhauptstrom aufweist. Am Kopf der Absorptionskolonne wird durch Leitung 5 ein Reingas mit einem sehr niedrigen Taupunkt, z. B. von niedriger als −25°C bei 80 bar abgezogen. Das am Boden der Absorptionskolonne durch Leitung 6 abgezogene, beladene Lösungsmittel wird in der Entspannungsverdampfungszone 7 auf einen Druck, der höher, z. B. um 1 bis 50 bar, höher, als der Druck in der Desorptionskolonne liegt, entspannt und der sich dabei bildende dampfförmige Anteil, der bei der Erdgasbehandlung als Hauptkomponente Methan enthält, über Leitungen 8 und 10 und Kompressor 9 in den Sumpf der Kolonne, zweckmäßig nach Vermischung mit

dem über Leitung 1 zugeführten Rohgas, zurückgeführt. Das am Boden der Entspannungsverdampfungszone 7 abgezogene Lösungsmittel wird durch Leitung 11 zum Wärmeaustauscher 14 und durch Leitung 12 und 13 nach Entspannung über Drossel 15 zum Kopf der Desorptionskolonne 25 geleitet, in der der Schwefelwasserstoff aus dem abwärts fließenden Lösungsmittel, hauptsächlich durch aufsteigenden Methanoldampf, ausgestreift und über Leitung 16 am Kopf der Desorptionskolonne 25 nach Kondensation und Rückführung von Wasser abgezogen wird. Der hauptsächlich Schwefelwasserstoff enthaltende Strom der Leitung 16 kann einer Clausanlage zugeführt werden. Das als Hauptkomponente Methanol enthaltende Ausstreifgas wird am Sumpf von Kolonne 25 durch indirekten Kontakt des ausgestreiften Lösungsmittels mit einem Heizmedium, das im Aufkocher 24 erhitzt wird, erzeugt und aufwärts im Gegenstrom zum auszustreifenden Lösungsmittel geführt. Das ausgestreifte Lösungsmittel wird am Boden von Kolonne 25 abgezogen und über Leitungen 17 und 3 nach Durchlaufen von Wärmetauscher 14 in die Absorptionskolonne 2 zurückgeführt, wobei zweckmäßig dem zurückgeführten Lösungsmittelstrom über Leitung 18 Methanol zugemischt wird. Über Leitung 19 wird aus dem im Kreise geführten Lösungsmittelstrom ein Lösungsmittelnebenstrom abgezogen, der der Destillationskolonne 20, beispielsweise als Seitenstrom, zugeführt und aus dem in Kolonne 20 durch Destillation Wasser und Methanol als Kopfprodukt ganz oder teilweise abgezogen werden. Das am Boden von Kolonne 20 abgezogene Lösungsmittel wird der Absorptionskolonne 2 über Leitung 4 als Lösungsmittelnebenstrom zugeführt. Das am Kopf von Destillationskolonne 20 abgezogene Gemisch aus Wasser und Methanol wird über Leitung 21 einer nachgeschalteten Destillationskolonne 22 zugeführt und durch Destillation in Wasser und Methanol aufgetrennt, wobei das Wasser als Sumpfprodukt über Leitung 13 und das Methanol am Kopf der Destillationskolonne 22 über Leitung 18 abgezogen wird. Das abgezogene Methanol wird zweckmäßig in den Lösungsmittelhauptstrom, eventuell nach Zugabe frischen Methanols über Leitung 26, zurückgeführt.

Das nachstehende Beispiel dient der weiteren Erläuterung der Erfindung.

## Beispiel

Aus einem Erdgas mit folgender Zusammensetzung

| | |
|---|---|
| $CH_4$ | 80,90 Vol.-% |
| $C_2H_6$ | 0,20 Vol.-% |
| $N_2$ | 3,78 Vol.-% |
| $CO_2$ | 9,00 Vol.-% |
| $H_2S$ | 6,10 Vol.-% |
| $H_2O$ | 0,02 Vol.-% |

wird bei einem Druck von ca. 80 bar in einer Gasreinigungsanlage, die eine Absorptions- und Desorptionszone enthält, mit einem Gemisch von Methyl-isopropyl-äthern von Polyäthylenglykolen (mit einem mittleren Molekulargewicht von 316) mit einem Gehalt von ca. 1 Gew.-% Methanol als Lösungsmittel selektiv Schwefelwasserstoff auf eine Endreinheit von ca. 3 Vol.-ppm entfernt. Das aus der Absorptionszone erhaltene Lösungsmittel wird in der Desorptionszone bei 140°C und 1,6 bar von Schwefelwasserstoff befreit. Das gereinigte Gas verläßt die Absorptionszone mit einer Temperatur von ca. 3°C und besitzt einen Taupunkt von −40°C. Aus dem erhaltenen Gas scheidet sich selbst bei sehr tiefen winterlichen Temperaturen kein Wasser in den Gasleitungssystemen ab. Wegen des sehr niedrigen Wassergehalts besteht bei dem erhaltenen Gas auch nicht die Gefahr der Bildung von festen Assoziationsprodukten aus Wasser und Methan, sog. Gashydrate, die sich an den Wandungen festsetzen und zu einem vollkommenen Zuwachsen der Gasleitung führen können.

## Vergleichsversuch

Man verfährt wie im Beispiel beschrieben, wobei jedoch das der Absorptionszone zugeführte Lösungsmittel anstelle des Methanolgehaltes einen Gehalt von ca. 2 Gew.-% Wasser aufweist. Das die Absorptionszone verlassende gereinigte Gas, das die gleiche Reinheit bezüglich Schwefelwasserstoff wie im Beispiel aufweist, besitzt einen Wassergehalt entsprechend einem Taupunkt von lediglich ca. −15°C. Bei diesem Wassergehalt besteht jedoch bei tiefen winterlichen Temperaturen die Gefahr der Wasserabscheidung und Bildung von festen Gashydraten in den Gasleitungssystemen.

**Patentansprüche**

1. Verfahren zur gleichzeitigen Entfernung von Wasser und Schwefelwasserstoff aus Wasser und Schwefelwasserstoff enthaltenden Gasen durch Behandlung der Gase in einer Absorptionszone unter erhöhtem Druck mit Dialkyläthern von Polyäthylenglykolen als Lösungsmittel, Ausstreifen des

Schwefelwasserstoffs aus dem aus der Absorptionszone erhaltenen beladenen Lösungsmittel in einer Desorptionszone sowie Abtrennen des in der Absorptionszone aufgenommenen Wassers aus dem Lösungsmittel und Rückführung des regenerierten Lösungsmittels in die Absorptionszone, dadurch gekennzeichnet, daß das Lösungsmittel zusätzlich 0,01 bis 20 Gew.-% eines Alkohols oder Äthers mit einem Siedepunkt im Siedebereich von 50 bis 140° C, bezogen auf die Lösungsmittelmischung, enthält.

2. Verfahren nach Anspruch 1, dadurch gekennzeichnet, daß das der Absorptionszone zugeführte Lösungsmittel einen Wassergehalt von weniger als 1,8 Gew.-% aufweist.

3. Verfahren nach Anspruch 1 und 2, dadurch gekennzeichnet, daß der Absorptionszone außer einem Lösungsmittelhaupstrom oberhalb der Zuführung des Lösungsmittelhauptstroms ein zweiter Lösungsmittelstrom zugeführt wird, der einen geringeren Gehalt an dem Alkohol oder Äther mit einem Siedepunkt im Siedebereich von 50 bis 140°C und ggf. an Wasser aufweist als der Lösungsmittelhauptstrom.

4. Verfahren nach Anspruch 1 bis 3, dadurch gekennzeichnet, daß man aus dem im Kreise geführten Lösungsmittelstrom einen Lösungsmittelnebenstrom abzieht, aus dem Lösungsmittelnebenstrom in einer Abtrennzone Wasser und den Alkohol oder Äther mit einem Siedepunkt im Siedebereich von 50 bis 140° C ganz oder teilweise abtrennt und den aus der Abtrennzone erhaltenen Lösungsmittelnebenstrom der Absorptionszone als zweiten Lösungsmittelstrom zuführt.

5. Verfahren nach Anspruch 4, dadurch gekennzeichnet, daß die Abtrennzone als Destillationszone betrieben und daß in der Destillationszone ein Druck aufrechterhalten wird, der niedriger liegt als der Druck in der Desorptionszone.

**Claims**

1. A process for simultaneously removing water and hydrogen sulfide from gases containing both of these by treating the gases, in an absorption zone under superatmospheric pressure, with polyethylene glycol dialkyl ethers as a solvent, stripping the hydrogen sulfide from the charged solvent, obtained from the absorption zone, in a desorption zone, removing the water, taken up in the absorption zone, form the solvent and recycling the regenerated solvent to the absorption zone, wherein the solvent additionally contains form 0,01 to 20% by weight, based on the solvent mixture, of an alcohol or ether boiling in the range from 50 to 140° C.

2. A process as claimed in claim 1, wherein the solvent fed to the absorption zone contains less than 1,8% by weight of water.

3. A process as claimed in claims 1 and 2, wherein, additionally to a solvent main stream, a second solvent stream is fed to the absorption zone at a point above the feed point of the main stream, which second stream has a lower content of the alcohol or ether, boiling in the range from 50 to 140° C, and of water, if any, than the solvent main stream.

4. A process as claimed in claims 1 to 3, wherein a solvent branch stream is taken from the recycled solvent stream, water and the alcohol or ether, boiling in the range from 50 to 140° C, are partially or completely removed from the solvent branch stream in a separation zone, and the solvent branch stream leaving this zone is fed, as a second solvent stream, to the absorption zone.

5. A process as claimed in claim 4, wherein the separation zone is operated as a distillation zone, and a pressure is maintained in the distillation zone which is lower than the pressure in the desorption zone.

**Revendications**

1. Procédé pour l'élimination simultanée de l'eau et de l'hydrogène sulfuré de mélanges gazeux qui en contiennent par traitement d'un tel mélange gazeux dans une zone d'absorption, sous pression accrue, avec des éthers de dialcoyle de polyéthylène-glycols comme solvant, extraction de l'hydrogène sulfuré du solvant chargé, quittant la zone d'absorption, dans une zone de désorption, séparation de l'eau absorbée dans la zone d'absorption du solvant et recyclage du solvant régénéré dans la zone d'absorption, caractérisé en ce que le solvant contient en outre 0,01 à 20% du poids du mélange solvant d'un alcool ou d'un éther d'un point d'ébullition compris dans la gamme de 50 à 140° C.

2. Procédé suivant la revendication 1, caractérisé en ce que le solvant introduit dans la zone d'absorption possède une teneur en eau inférieure à 1,8% en poids.

3. Procédé suivant l'une des revendications 1 et 2, caractérisé en ce que l'on introduit dans la zone d'absorption, en un point situé au-dessus du point d'introduction du courant principal de solvant, un courant secondaire de solvant avec une teneur en alcool ou en éther d'un point d'ébullition compris entre 50 et 140°C et le cas échéant une teneur en eau inférieures à celles du courant principal de solvant.

4. Procédé suivant l'une des revendications 1 à 3, caractérisé en ce que l'on soutire du courant de solvant circulant en circuit fermé un courant partiel de solvant, dont on sépare dans une zone

d'extraction, en totalité ou en partie, l'eau et l'alcool ou l'éther d'un point d'ébullition compris entre 50 et 140° C, puis on introduit le courant partiel quittant la zone d'extraction comme courant secondaire de solvant dans la zone d'absorption.

5. Procédé suivant la revendication 4, caractérisé en ce que la zone d'extraction est une zone de distallation, dans laquelle est maintenue une pression inférieure à la pression régnant dans la zone de désorption.

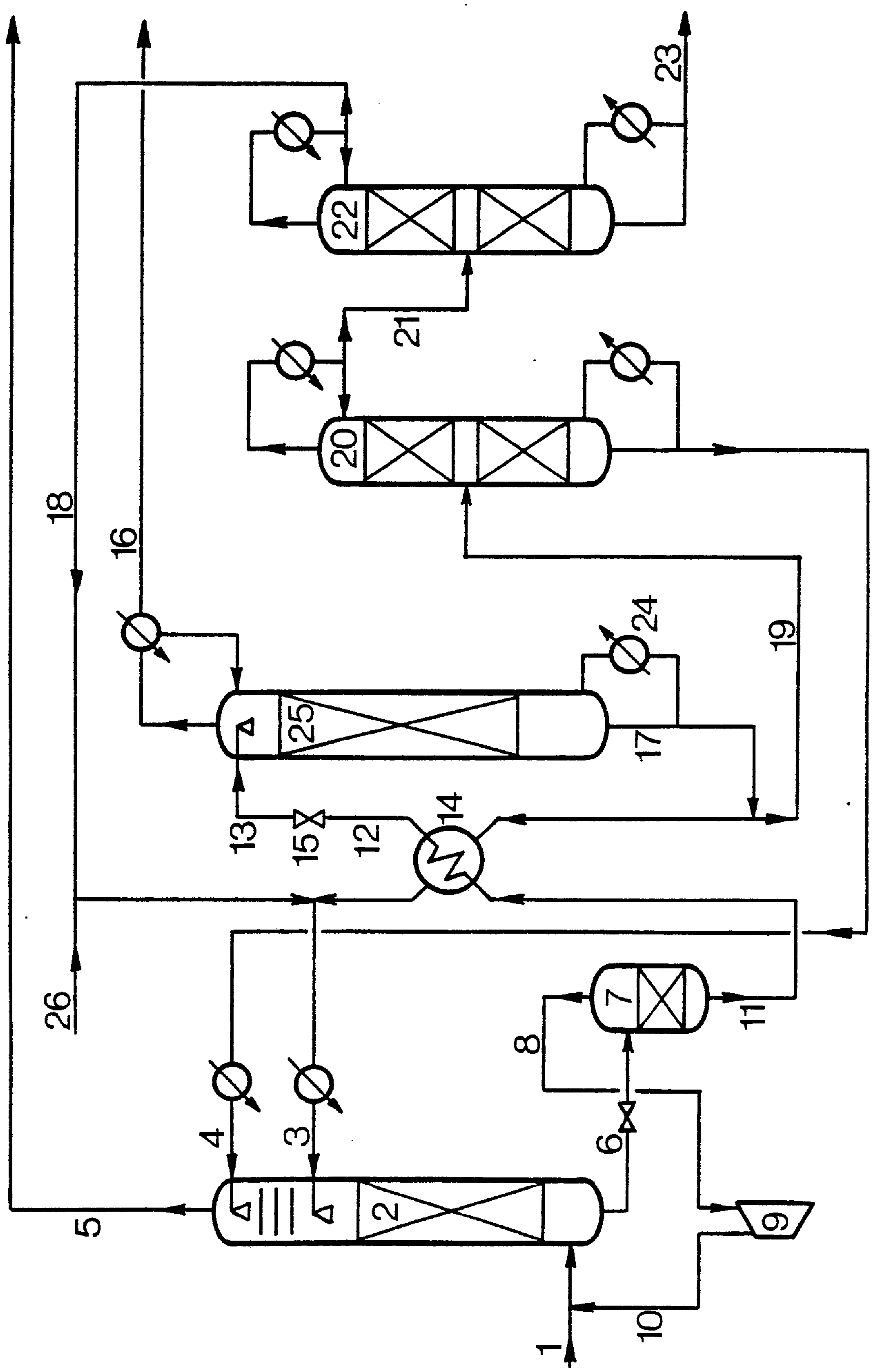
1
2
3
4
5
6
7
8
9
10
11
12
13
14
15
16
17
18
19
20
21
22
23
24
25
26